# EUROPÄISCHE PATENTSCHRIFT

(11) **EP 3 794 402 B1**
(45) Veröffentlichungstag und Bekanntmachung des Hinweises auf die Patenterteilung: **28.02.2024**
(21) Anmeldenummer: 19725294.3
(22) Anmeldetag: 09.05.2019
(51) Int. Cl.: G02B 27/01, G02F 1/1335, G02B 27/30, G02B 19/00

(54) **HEAD-UP-DISPLAY**
HEAD-UP DISPLAY
DISPOSITIF D'AFFICHAGE TÊTE HAUTE

(30) Priorität: 15.05.2018 DE 102018207516
(43) Veröffentlichungstag der Anmeldung: 24.03.2021
(73) Patentinhaber: Continental Automotive Technologies GmbH, 30165 Hannover (DE)
(72) Erfinder: JUNGE, Christian, 65824 Schwalbach a. Ts. (DE); PODRYGA, Sergii, 65824 Schwalbach a. Ts. (DE); KAPITZKE, Svenja, 65824 Schwalbach a. Ts. (DE)
(74) Vertreter: Continental Corporation
(86) Internationale Anmeldenummer: PCT/EP2019/061891
(87) Internationale Veröffentlichungsnummer: WO 2019/219488

(56) Entgegenhaltungen:
- EP-A1- 2 587 305
- US-A1- 2006 158 899
- US-A1- 2016 299 342
- US-B1- 7 932 960

## Beschreibung

Die vorliegende Erfindung betrifft ein Head-Up-Display mit einer Anzeige, die von mehreren, verteilt angeordneten Lichtquellen beleuchtet wird, wobei zwischen jeder Lichtquelle und der Anzeige ein Kollimator angeordnet ist.

Aus der WO 2017/126 455 A1 ist ein solches Head-Up-Display bekannt. Hier sind die Lichtquellen auf Gitterpunkten eines rechtwinkligen Gitters angeordnet. Die Kollimatoren sind Konvexlinsen, die entsprechend der Lichtquellen in einem rechtwinkligen Gitter angeordnet sind. Dabei überlappen sich die Konvexlinsen. Ihr jeweils äußerer, mit der benachbarten Konvexlinse überlappender Bereich ist in der benachbarten Konvexlinse enthalten. Er ist somit nicht Teil der ersten Konvexlinse, deren Rand er ohne die Überlappung bilden würde. Die Konvexlinsen sind also jeweils an mindestens einem ihrer Ränder beschnitten, benachbarte Konvexlinsen stoßen aneinander an. Bei einer solchen Anordnung tritt das Problem auf, daß sich Licht aus benachbarten Konvexlinsen in deren Grenzregion überlagert und somit in den Bereichen der Grenzregion eine besonders hohe Beleuchtungsstärke auftritt. In dem bekannten Head-Up-Display sind dazu abgerundete oder abgeflachte Übergänge in den Grenzregionen vorgesehen, die an die Geometrie der aneinander anstoßenden Konvexlinsen angepaßt sind. Dies hat den Nachteil, daß die abgerundeten Übergänge bewirken, daß ein Teil des Lichts so gebrochen wird, daß die entsprechenden Strahlen nicht in Hauptstrahlrichtung verlaufen und somit die Anzeige nicht erreichen. Es tritt somit ein Lichtverlust als Nebeneffekt der gleichmäßigeren Beleuchtungsstärke auf. Ein demgegenüber verbessertes Head-Up-Display ist erwünscht.

In US 7,932,960 B1 wird ein Head-Up-Display mit einer Anzeige offenbart, die von mehreren, verteilt angeordneten Lichtquellen beleuchtet wird. Zwischen jeder Lichtquelle und der Anzeige ist ein TIR-Kollimator angeordnet. Der TIR-Kollimator verteilt die von der ihm zugeordneten Lichtquelle kommenden Strahlen so um, daß ein gerichtetes Strahlenbündel gleichmäßiger Beleuchtungsstärke erzielt wird.

US 2006/0158899 A1 betrifft mit reflektierenden Spiegelelementen zusammenwirkende Lichtquellen. EP 2 587 305 A1 betrifft eine Beleuchtungseinheit, bei der einzelner Lichtquellen mit einer der maximal darzustellenden Helligkeit angesteuert werden. US 2006/0299342 A1 betrifft ein Head-Up-Display bei dem eine Streuplatte Verwendung findet.

Ein erfindungsgemäßes Head-Up-Display ist in Anspruch 1 angegeben. Vorteilhafte Weiterbildungen sind in den abhängigen Ansprüchen angegeben.

Es ist ein TIR-Kollimator vorgesehen, der ein die Strahlen, die von der ihm zugeordneten Lichtquelle kommen, in ein gerichtetes Strahlenbündel gleichmäßiger Beleuchtungsstärke umverteilender TIR-Kollimator ist. Dies hat den Vorteil, daß eine höhere Lichtintensität bei gleichbleibendem Energieverbrauch der Lichtquellen erzielt wird, oder ein reduzierter Energieverbrauch bei gleichbleibender Lichtintensität. Außerdem entsteht weniger störende Abwärme aus den Lichtquellen und aus Strahlen, die durch Brechung oder Beugung aus der Hauptstrahlrichtung heraus gelangen, und im Head-Up-Display an entsprechenden Flächen absorbiert werden, ohne zum darzustellenden Bild beizutragen. Erfindungsgemäß wird das von der Lichtquelle auf den TIR-Kollimator fallende Licht so umverteilt, daß eine gleichmäßige Intensitätsverteilung, eine gleichmäßige Beleuchtungsstärke, erzielt wird. Kein Lichtstrahl wird aus der Hauptstrahlrichtung herausgebrochen. Im Gegenteil, auch stark von der Hauptstrahlrichtung abweichende, in den Kollimator eintretende Lichtstrahlen werden vom Kollimator so umverteilt, daß sie den Kollimator möglichst in Hauptstrahlrichtung verlassen.

Ein erfindungsgemäßes Head-Up-Display weist vorteilhaft ein Lichtverteilungselement auf. Dieses dient dazu, die von dem Kollimator abgegebene Lichtverteilung an die im Strahlengang folgenden optischen Elemente anzupassen.

Das Lichtverteilungselement ist vorteilhafterweise eine Streuplatte, eine Linsenanordnung, eine Linse oder eine Anordnung von Mikrolinsen. Auch eine Kombination aus einem oder mehreren davon liegt im Rahmen der Erfindung. Eine Streuplatte hat den Vorteil, die Winkelverteilung des vom Kollimator kommenden Lichts aufzuweiten und so eine Betrachtung durch den Nutzer aus geringfügig unterschiedlichen Winkeln zu ermöglichen. Die Anzeige des Head-Up-Displays verschwindet somit nicht, wenn der Nutzer seine Position im Fahrzeug ändert. Störende Irritationen werden somit vermieden. Eine Linsenanordnung hat den Vorteil, eine sehr genaue Einstellung der Winkelverteilung des aufgeweiteten Lichts zu ermöglichen. Besteht die Linsenanordnung aus einer einzigen Linse, so hat dies den Vorteil der kostengünstigen Herstellung und Justierung beim Zusammenbau. Eine Mikrolinsenanordnung hat den Vorteil einer flachen und somit platzsparenden Bauweise.

Erfindungsgemäß ist ein TIR-Kollimator. Ein solcher Kollimator nutzt totale innere Reflexion aus, um in ihn eingetretene Lichtstrahlen gegebenenfalls mehrfach an seiner inneren Oberfläche zu totalreflektieren, bevor diese aus dem Kollimator austreten. Dabei ist die Form der inneren Oberfläche so gestaltet, daß die Richtung der austretenden Lichtstrahlen nahezu parallel zur gewünschten Richtung des Hauptstrahlengangs ist. Totale innere Reflexion, die auch mit dem Kürzel TIR oder als innere Totalreflexion bezeichnet wird, wird auf unterschiedliche Weise sichergestellt. Gemäß einer Variante wird die Form der Oberfläche so gestaltet, daß der Winkel zwischen dem auf die innere Oberfläche fallenden Lichtstrahl und dem Lot auf dieser inneren Oberfläche so ausfällt, daß er größer ist als der Grenzwinkel für Totalreflexion. Dies hängt von mehreren Faktoren ab, beispielsweise vom Brechungsindex des Materials des TIR-Kollimators und dem Brechungsindex des ihn umgebenden Materials. Ein Vorteil der Verwendung eines TIR-Kollimators ist, daß dieser auch sehr flach aus der Lichtquelle austretende Strahlen verwertet und sie auf kurzer Strecke weit auffächert. Es entsteht ein gerichtetes Strahlenbündel mit vergleichsweise großem Durchmesser. Somit wird eine Verringerung des Bauraums in Ausbreitungsrichtung des kollimierten Strahlenbündels erzielt.

Gemäß einer Variante ist ein Teil der Oberfläche des TIR-Kollimators mit einer nach innen reflektierenden Beschichtung versehen. Ein solcher Kollimator kombiniert totale innere Reflexion und Reflexion an einer beschichteten Oberfläche. Dies hat den Vorteil, daß Flächen, an denen keine totale innere Reflexion auftritt, aufgrund der reflektierenden Beschichtung einen großen Anteil der von innen auf sie auftreffenden Lichtstrahlen reflektieren, sodaß diese Lichtstrahlen nicht ungenutzt verlorengehen, sondern auch zu dem gerichtet aus dem Kollimator austretenden Lichtstrom beitragen. Eine vereinfachte Formgebung der entsprechenden Oberfläche und/oder ein größerer Anteil reflektierter und damit zum gerichteten Lichtstrom beitragender Lichtstrahlen wird somit erreicht.

Gemäß der Erfindung weist der TIR-Kollimator eine Vielzahl von Ringsektoren auf, die radial unterschiedlich ausgedehnt sind.

Dies hat den Vorteil, daß jeder Ringsektor so geformt ist, daß die den Ringsektor in Richtung des Hauptstrahlengangs verlassenden Strahlen eine gleichmäßige Beleuchtungsstärke aufweisen. Damit wird eine flächendeckende Anordnung ermöglicht. Die TIR-Kollimatoren brauchen somit keinen runden Querschnitt aufzuweisen, sondern setzen sich aus vielen Ringsektoren unterschiedlicher radialer Ausdehnung zusammen. So können quadratische TIR-Kollimatoren erzielt werden, rechteckige, sechs- oder achteckige TIR-Kollimatoren, oder freigeformte. Somit lassen sich die Fläche füllende Anordnungen erzielen, gegebenenfalls auch unter Verwendung von zweien oder mehreren unterschiedlich geformten TIR-Kollimatoren.

Erfindungsgemäß weisen die TIR-Kollimatoren identische Abmessungen in einer Ebene senkrecht zur Hauptstrahlrichtung auf. Dies hat den Vorteil, daß eine beliebige Anzahl TIR-Kollimatoren flächenfüllend angeordnet werden kann. Die Anzahl der Lichtquellen kann somit, je nach Bedarf, beispielsweise für unterschiedliche Typen von Head-Up-Displays, erhöht oder erniedrigt werden, ohne die TIR-Kollimatoren entsprechend anpassen zu müssen. Durch diese Skalierbarkeit lassen sich Head-Up-Displays mit unterschiedlichen Bildabmessungen konstruieren, ohne die Lichtquellen und die TIR-Kollimatoren entsprechend neu konstruieren zu müssen. Die Skalierbarkeit ermöglicht ebenfalls, eine größere Anzahl von Lichtquellen zu verwenden was den Vorteil einer gleichmäßigeren Wärmeabgabe der Lichtquellen an deren Träger hat. Dies führt zu einer geringeren Verformung durch Erwärmung und es ermöglicht eine gleichmäßigere Kühlung. Somit finden TIR-Kollimatoren identischer Abmessungen in unterschiedlichen Varianten von Head-Up-Displays Verwendung, wodurch große Stückzahlen erreicht werden, die zu einer kostengünstigen Herstellung einer großen Anzahl identischer Bauteile, hier Kollimatoren, führt.

Erfindungsgemäß ist vorgesehen, daß die TIR-Kollimatoren lückenlos aneinander angeordnet sind. Dies wird entweder durch regelmäßige geometrische Form und Abmessungen so gestaltet, daß die TIR-Kollimatoren lückenlos aneinanderlegbar und in dieser Anordnung aneinanderfügbar sind, beispielsweise durch Kleben. Eine andere Variante besteht darin, daß eine Anordnung mehrerer nebeneinanderliegender Kollimatoren einstückig ausgeführt ist. Sowohl einzelne TIR-Kollimatoren als auch eine einstückige Anordnung mehrerer TIR-Kollimatoren wird vorteilhafterweise mittels Spritzguß oder einem ähnlichen Verfahren, wie beispielsweise dem Heißpräge-Verfahren hergestellt. Die lückenlose Anordnung hat den Vorteil, daß keine oder nahezu keine Lücke zwischen den die einzelnen TIR-Kollimatoren verlassenden Strahlenbündel auftreten. Eine gleichmäßige Ausleuchtung der Anzeige ist somit gewährleistet.

Gemäß einer Variante der Erfindung sind zumindest zwei unterschiedliche Typen Lichtquellen vorhanden. Für jeden der unterschiedlichen Typen Lichtquelle ist ein Typ Kollimator vorhanden, wobei die unterschiedlichen Typen von Kollimatoren in einer Ebene senkrecht zur Hauptstrahlrichtung identische Abmessungen aufweisen. Dies hat den Vorteil, daß auch unterschiedliche Typen Kollimatoren miteinander kombinierbar sind. Somit ist ein baukastenartiger Mix unterschiedliche Typen von Lichtquellen ermöglicht, ohne durch die Form der zugehörigen Kollimatoren eingeschränkt zu sein. Ein solcher Mix ist beispielsweise dann gewünscht, wenn an unterschiedlichen Orten der Anordnung der Lichtquellen unterschiedliche Wärmeabgabe gewünscht ist oder unterschiedliche Abmessungen der Lichtquellen erforderlich sind.

Gemäß einer weiteren Variante der Erfindung sind zumindest zwei unterschiedliche Typen Lichtquellen vorhanden. Für jeden der unterschiedlichen Typen Lichtquelle ist ein Typ Kollimator vorhanden, wobei die unterschiedlichen Typen von Kollimatoren in einer Ebene senkrecht zur Hauptstrahlrichtung unterschiedliche, aufeinander abgestimmte Abmessungen aufweisen. Diese unterschiedlichen Typen von Kollimatoren sind vorteilhafterweise so aneinander angeordnet, daß sie eine in der genannten Ebene liegende Fläche lückenlos ausfüllen. Dies hat den Vorteil, daß diese unterschiedliche Typen Kollimatoren miteinander kombinierbar sind und unterschiedlich starke Lichtquellen verwendet werden können ohne Einbußen bei der räumlichen Gleichmäßigkeit des abgegebenen Lichtstroms hinnehmen zu müssen. Auch hier ist ein baukastenartiger Mix unterschiedliche Typen von Lichtquellen ermöglicht. Die unterschiedliche Form der zugehörigen Kollimatoren reduziert das Risiko der Verwechslung und somit das Risiko einer Fehlmontage.

Ein Verfahren zum Betreiben eines erfindungsgemäßen Head-Up-Displays weist das Ansteuern einzelner Lichtquellen mit einer Leistung auf, die der maximal darzustellenden Helligkeit derjenigen Fläche der Anzeige entspricht, die der jeweiligen Lichtquelle zugeordnet ist. Dies hat den Vorteil, daß durch sogenanntes Reduzieren der lokalen Lichtleistung, auch Local Dimming genannt, Energie gespart und die bei der Lichterzeugung entstehende Abwärme reduziert wird. Local Dimming läßt sich bei Head-Up-Displays, die ein möglichst gerichtetes Strahlenbündel für die Hinterleuchtung der Anzeige benötigen, mit herkömmlichen Anordnungen von Lichtquellen nicht realisieren. Ist herkömmlich eine einzige Lichtquelle vorgesehen, oder eine Anordnung von zwei Lichtquellen, so läßt sich nur ein großräumiges, nicht aber ein lokales Reduzieren der Lichtleistung erzielen. Bei einer herkömmlichen Anordnung von mehreren Lichtquellen läßt sich aufgrund der geforderten gleichmäßigen Beleuchtungsstärke nicht vermeiden, daß sich Licht der unterschiedlichen Lichtquellen in nichttrivialer Weise überlappt. Ein Reduzieren der Lichtleistung einer Lichtquelle führt dann oft zu einem gleichzeitigen Reduzieren der Lichtleistung in einem anderen lokalen Bereich, in dem aber unter Umständen die volle Lichtleistung benötigt wird. Erst mit der erfindungsgemäßen Anordnung, bei der sich das von unterschiedlichen Kollimatoren kommende Licht nicht überlappt, läßt sich ein Reduzieren der lokalen Lichtleistung auf einfache Art und Weise erzielen.

Weitere Vorteile der Erfindung lassen sich auch der nachfolgenden Beschreibung von Ausführungsbeispielen anhand der Abbildungen entnehmen. Dabei sind gleiche Bezugszeichen für gleiche oder gleichwirkende Elemente in allen Figuren verwendet, aber nicht notwendigerweise zu jeder Figur einzeln beschrieben. Es zeigen:
- Fig.1: Head-Up-Display, geschnittene Darstellung
- Fig.2: Head-Up-Display in Einzelteildarstellung
- Fig.3: TIR-Kollimator, geschnittene Darstellung
- Fig.4: TIR-Kollimator, geschnittene Darstellung
- Fig.5: TIR-Kollimator, rund
- Fig.6: TIR-Kollimator, segmentiert
- Fig.7: TIR-Kollimator, wabenförmig, Unterseite
- Fig.8: TIR-Kollimator, wabenförmig, Oberseite
- Fig.9: Kollimatoranordnung, wabenförmig
- Fig.10: Kollimatoranordnung
- Fig.11: Beleuchtungsstärke eines TIR-Kollimators
- Fig.12: Höhenliniendarstellung der Lichtverteilung
- Fig.13: Verfahren gemäß der Erfindung

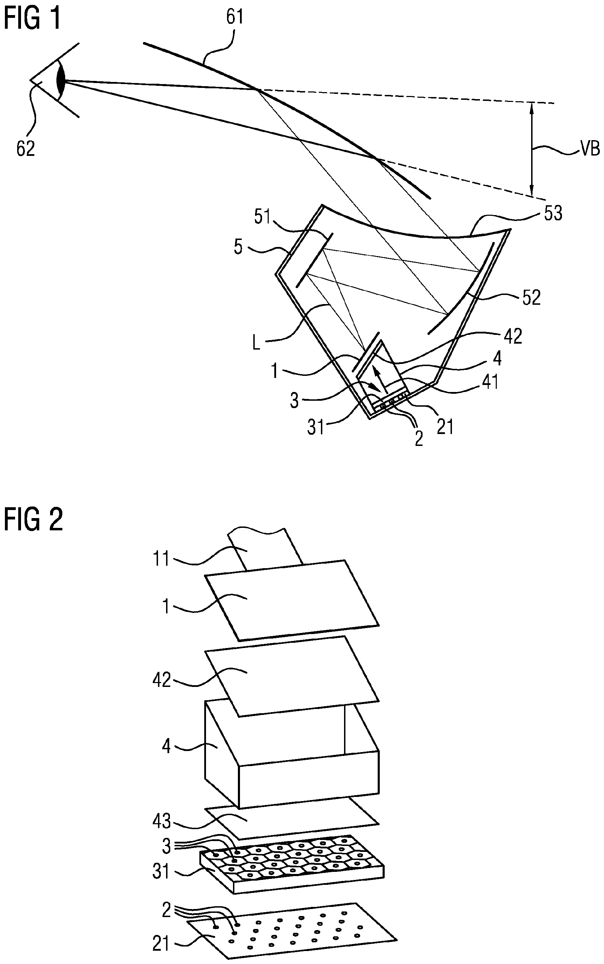

Fig.1 zeigt ein erfindungsgemäßes Head-Up-Display in schematischer, geschnittener Darstellung. Man erkennt eine Anzeige 1, die hier als Flüssigkristallanzeige ausgebildet ist. Sie wird von mehreren verteilt angeordneten Lichtquellen 2 beleuchtet, die auf einer Leiterplatte 21 angeordnet sind. Die Lichtquellen 2 sind in dieser Darstellung aufgrund der Größenverhältnisse nicht gut erkennbar, werden aber in den nachfolgenden Figuren noch näher beschrieben. Dabei sind für gleiche oder gleichwirkende Elemente gleiche Bezugszeichen vorgesehen, eine Beschreibung erfolgt nur insoweit, als Unterschiede zur vorhergehenden Beschreibung bestehen, oder es zum Verständnis als sinnvoll angesehen wird.

Zwischen den Lichtquellen 2 und der Anzeige 1 sind Kollimatoren 3 in einer Kollimatoranordnung 31 angeordnet. Sie kollimieren die von den Lichtquellen 2 kommenden Lichtstrahlen und verteilen sie dabei so um, daß diese parallel oder nahezu parallel zur durch einen Pfeil 41 angedeuteten Hauptstrahlrichtung verlaufen. Die Lichtstrahlen sind hier nicht im einzelnen dargestellt. Sie verlaufen innerhalb eines Lichtkastens 4 an dessen oberem Ende eine Streuplatte 42 angeordnet ist, oberhalb der sich die Anzeige 1 befindet. Die Lichtquellen 2 und die Kollimatoren 3 sind am unteren Ende des Lichtkastens 4 angeordnet. Die Streuplatte 42 sorgt für eine geringfügige Winkelaufweitung, die es dem Betrachter ermöglicht, das anzuzeigende Bild aus einem gewissen Winkelbereich zu betrachten. Die Streuplatte 42 ist eine optische Platte, die neben einem speziell angepaßten Diffusor auch eine Linsenfunktion aufweist.

Ausgehend von der Anzeige 1 sind exemplarisch zwei Lichtstrahlen L eingezeichnet, die von einem Faltspiegel 51 auf einen gekrümmten Spiegel 52 reflektiert werden. Die Krümmung des gekrümmten Spiegels 52 ist derjenigen der Windschutzscheibe 61 des Fahrzeugs angepaßt, in dem das Head-Up-Display angeordnet ist. Beide Krümmungen kompensieren sich, sodaß das vom Auge 62 des Betrachters wahrgenommene virtuelle Bild VB unverzerrt erscheint. Das virtuelle Bild VB erscheint dem Betrachter als außerhalb des Fahrzeugs, in der Umgebung, befindlich. Es ist der Umgebung somit überlagert. Der Betrachter braucht den Blick von der Umgebung, beispielsweise der Fahrbahn, nicht abzuwenden, um die von dem Head-Up-Display angezeigten Informationen zu sehen. Dies ist ein Vorteil gegenüber der traditionellen Instrumentenanzeige. Um letztere zu sehen muß der Betrachter nicht nur den Blick von der Umgebung abwenden, sondern auch seine Augen auf eine kürzere Entfernung anpassen. Außer der Windschutzscheibe 61 befinden sich alle wesentlichen Bestandteile des Head-Up-Displays innerhalb eines Gehäuses 5. Dieses wird zur Windschutzscheibe 61 hin mittels einer durchsichtigen Abdeckscheibe 53 abgeschlossen, durch die das vom gekrümmten Spiegel 52 kommende Licht fällt. Statt der Windschutzscheibe 61 ist gemäß einer Variante eine hier nicht dargestellte sogenannte Combinerscheibe vorgesehen, die das vom gekrümmten Spiegel 52 kommende Licht in Richtung Auge 62 reflektiert. Die Anzeige 1 ist hier als durchscheinende Anzeige dargestellt. Gemäß einer Variante ist hier eine reflektierende Anzeige vorgesehen.

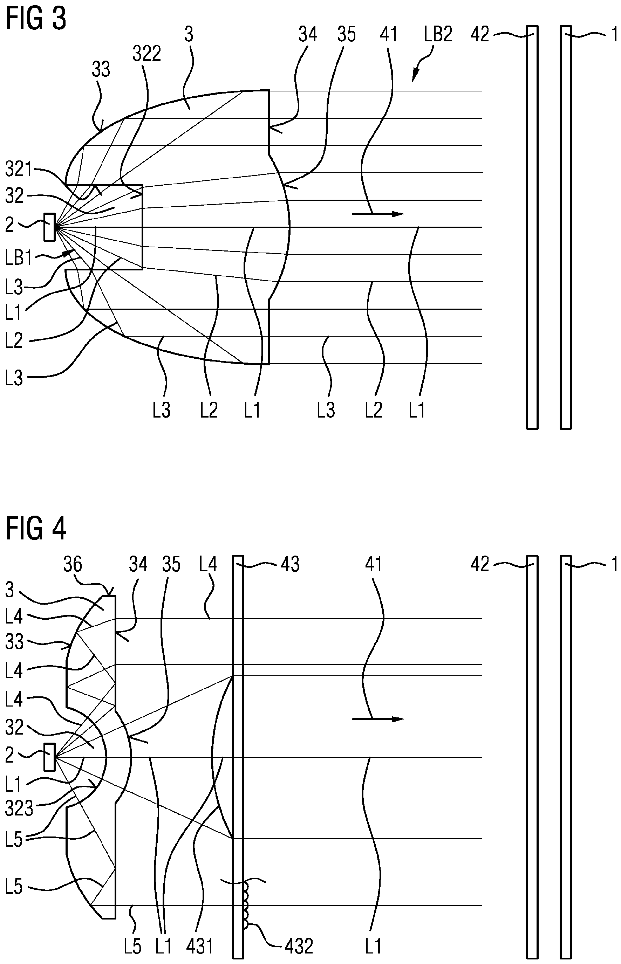

Fig.2 zeigt ein erfindungsgemäßes Head-Up-Display in Einzelteildarstellung. Man erkennt die Anzeige 1, die flexible Leiterbahnen 11 aufweist, mittels der sie mit Bildsignalen angesteuert wird. Ganz unten erkennt man die Leiterplatte 21 auf der sich mehrere Lichtquellen 2 befinden. Diese sind in vier Reihen angeordnet. In zweien davon befinden sich jeweils sieben Lichtquellen 2, in den anderen beiden jeweils sechs Lichtquellen 2. Oberhalb der Leiterplatte 21 befindet sich die Kollimatoranordnung 31, in der mehrere Kollimatoren 3 in einer der Anordnung der Lichtquellen 2 entsprechenden Formation angeordnet sind. Oberhalb der Kollimatoranordnung 31 befindet sich eine Linsenanordnung 43. Gemäß einer Variante der Erfindung weist sie mehrere Kollimatorlinsen 431 auf, die hier nicht dargestellt sind, und die entsprechend den Lichtquellen 2 und den Kollimatoren 3 angeordnet sind. Gemäß einer anderen Variante der Erfindung weist sie eine Vielzahl von Mikrolinsen 432 und/oder eine Diffusorfläche auf. Dies dient dazu, die Lichtverteilung an die von der HUD-Optik benötigten Winkelverhältnisse anzupassen. Zusammen mit der Streuplatte 42 wird somit aus dem gerichteten Licht der Kollimatoranordnung eine für das Head-Up-Display geeignete Lichtverteilung erzeugt. Beide Varianten können auch vorteilhaft kombiniert werden, wie in Fig.4 angedeutet.

Der Lichtkasten 4 dient dazu, das von den an seiner Unterseite angeordneten Bauteilen Leiterplatte 21, Kollimatoranordnung 31 und Linsenanordnung 43 abgegebene Licht zu den an dessen Oberseite angeordneten Bauteilen zu führen. Seine Seitenwände sind lichtundurchlässig, sodaß kein Streulicht von unten auf die Anzeige 1 gelangen kann. Die Seitenwände sind gemäß einer vorteilhaften Variante spiegelnd beschichtet ausgeführt. Am oberen Ende des Lichtkastens 4 befindet sich die Streuplatte 42. Oberhalb von dieser ist die Anzeige 1 angeordnet.

Fig. 3 zeigt einen TIR-Kollimator 3 in geschnittener Darstellung. Im folgenden wird ein Kollimator als TIR-Kollimator bezeichnet, wenn er zumindest zum Teil auf totaler innerer Reflexion beruht. Ein Hybridkollimator, der sowohl verspiegelnd beschichtete Reflexionsflächen aufweist, als auch unbeschichtete Flächen, an denen Lichtstrahlen mittels totaler innerer Reflexion reflektiert werden, wird somit hier auch als TIR-Kollimator bezeichnet. Der TIR-Kollimator 3 besteht aus Glas, Plexiglas oder einem anderen lichtdurchlässigen Material. Auf seiner linken Seite befindet sich eine Lichtquelle 2. Sie befindet sich in der Nähe einer sacklochartigen Ausnehmung 32, die sich auf der Unterseite des Kollimator 3, dessen Lichteingangsseite, befindet. Sie hat im dargestellten Ausführungsbeispiel einen rechtwinkligen Querschnitt mit einer Seitenfläche 321 und einer Bodenfläche 322. Nach radial außen schließt sich an die Ausnehmung 32 eine gekrümmte Oberfläche 33 an. Die der Lichtquelle 2 abgewandte Seite des Kollimators 3, an der das Licht austritt, weist im radial äußeren Bereich eine ringförmige Oberfläche 34 auf, in deren Zentrum sich eine konvexe Oberfläche 35 befindet.

Die Lichtquelle 2 erzeugt ein breitgefächertes Lichtbündel LB1. Ein zentraler Lichtstrahl L1 verläßt die Lichtquelle 2 in der durch den Pfeil 41 angedeuteten Hauptstrahlrichtung. Er tritt ungebrochen durch die Bodenfläche 322 der Ausnehmung 32 in den Kollimator 3 ein, passiert diesen und tritt an der konvexen Oberfläche 35 aus. Da er sich in der zentralen Symmetrieachse des Kollimators 3 befindet, wird er auch hier nicht gebrochen. Ein weiterer Lichtstrahl L2 verläuft in einem Winkel zur zentralen Symmetrieachse des Kollimators 3, und tritt in einem Randbereich der Bodenfläche 322 in den Kollimator 3 ein. Dabei wird er geringfügig zur zentralen Symmetrieachse hin gebrochen. Er trifft nach Durchlaufen des Kollimators 3 auf die Innenseite der konvexen Oberfläche 35, und zwar in deren äußerem Bereich, und wird dort zur zentralen Symmetrieachse hin gebrochen. Er verläßt den Kollimator 3 nahezu parallel zur Hauptstrahlrichtung. Der radial innere Bereich des Kollimators 3 wirkt mit der konvexen Oberfläche 35 ähnlich wie eine Sammellinse. Ein Lichtstrahl L3, der die Lichtquelle 2 in einem stark von der Hauptstrahlrichtung abweichenden Winkel verläßt, tritt durch die Seitenfläche 321 in den Kollimator 3 ein. Dabei wird er gebrochen und weist anschließend einen noch größeren Winkel zur Hauptstrahlrichtung auf. Er trifft dann an die Innenseite der gekrümmten Oberfläche 33, an der er totalreflektiert wird. Nach der Totalreflexion verläuft er bereits parallel zur Hauptstrahlrichtung und verläßt den Kollimator 3 durch die ringförmige Oberfläche 34. In der Darstellung ist die Fläche der ringförmigen Oberfläche 34 senkrecht zur Hauptstrahlrichtung eben, eine Brechung des Lichtstrahl L3 findet nicht statt, da dieser bereits parallel zur Hauptstrahlrichtung ausgerichtet ist. Gemäß einer Variante der Erfindung ist die ringförmige Oberfläche 34 nicht eben, sondern weist eine Krümmung auf. Diese Krümmung ist so gewählt, daß die durch sie hervorgerufene Brechung die durch die ringförmige Oberfläche 34 austretenden Strahlen nach Verlassen des Kollimators 3 parallel oder nahezu parallel zur Hauptstrahlrichtung sein läßt. Die Totalreflexion an der Innenseite der gekrümmten Oberfläche 33 wird im Ausführungsbeispiel dadurch erreicht, daß der entsprechende Grenzwinkel für die Totalreflexion nicht unterschritten wird. Gemäß einer Variante ist die gekrümmte Oberfläche 33 nach innen hin verspiegelt, sodaß die Totalreflexion auf die Verspiegelung zurückzuführen ist. In diesem Fall ist es nicht erforderlich, den Grenzwinkel zu beachten. Eine freiere Gestaltung der Form der gekrümmten Oberfläche 33 und gegebenenfalls weiterer Flächen des Kollimators 3 ist somit ermöglicht. In der Abbildung sind noch weitere Strahlen eingezeichnet, die entweder wie die Lichtstrahlen L1, L2 den Kollimator durch die konvexe Oberfläche 35 verlassen, oder wie der Lichtstrahl L3 durch die ringförmige Oberfläche 34. Die Flächen 33,34,35,321,322 sind weiterhin so gewählt, daß eine Umverteilung der in den Kollimator 3 einfallenden Lichtstrahlen sowohl zu einer Parallelisierung bezüglich der Hauptstrahlrichtung führt, als auch dazu, daß die Beleuchtungsstärke, also die Lichtleistung pro Fläche, nach Austritt der Lichtstrahlen aus dem Kollimator im Lichtbündel LB2 konstant oder nahezu konstant über der Fläche ist. Das den Kollimator 3 verlassende Lichtbündel LB2 passiert den - hier nicht dargestellten - Lichtkasten 4 und trifft auf die Streuplatte 42 und die Anzeige 1.

Fig.4 zeigt ebenfalls einen TIR-Kollimator 3 in geschnittener Darstellung. Dieser hat eine wesentlich geringere Ausdehnung in der Hauptstrahlrichtung, die auch hier durch den Pfeil 41 angedeutet ist. Zwischen dem Kollimator 3 und der Streuplatte 42 befindet sich hier eine Linsenanordnung 43. Sie weist in ihrem radial inneren Bereich zum Kollimator 3 hin eine Kollimatorlinse 431 auf. Im in der Abbildung unteren Bereich ist eine Variante der Linsenanordnung 43 mit einer Vielzahl von Mikrolinsen 432 gezeigt. Diese sind dazu geeignet, den Winkelbereich des abgestrahlten Lichts genau zu kontrollieren. Die gleiche Funktion kann auch über eine hier nicht dargestellte Diffusoroberfläche erreicht werden. Mittels der Mikrolinsen 432 kann der Winkelbereich genauer eingestellt werden als mittels einer Diffusoroberfläche. Diese führt dagegen aufgrund ihres ungleichmäßigen, nahezu statistischen Rasters zu einer geringeren potentiellen Störung durch Moirémuster oder ähnliche, durch die regelmäßige Anordnung hervorgerufenen Effekte, ist aber bei der Einstellung des Winkelbereichs weniger genau. Die Mikrolinsen 432 sind hier auf der dem Kollimator 3 abgewandten Seite der Linsenanordnung 43 dargestellt, eine Anordnung der Mikrolinsen 432 auf der dem Kollimator 3 zugewandten Seite der Linsenanordnung 43 liegt aber ebenfalls im Rahmen der Erfindung. Links vom Kollimator 3 befindet sich eine Lichtquelle 2.

Der Kollimator 3 weist auf seiner der Lichtquelle 2 zugewandten Unterseite, der Lichteintrittsseite, im radial äußeren Bereich eine gekrümmte Oberfläche 33 auf. Im radial inneren Bereich befindet sich eine Ausnehmung 32, die durch eine Konkavfläche 323 gebildet ist. An die gekrümmte Oberfläche 33 schließt sich an deren radial äußeren Ende eine Zylinderfläche 36 an. Auf der der Lichtquelle 2 abgewandten Oberseite des Kollimators 3, dessen Lichtaustrittsseite, befindet sich im radial äußeren Bereich eine ringförmige Oberfläche 34, die eine konvexe Oberfläche 35 im Zentrum einschließt. Ein zentraler Lichtstrahl L1, der die Lichtquelle 2 in Richtung der Symmetrieachse des Kollimators 3 verläßt, durchläuft die Ausnehmung 32, tritt an der Konkavfläche 323 ungebrochen in den Kollimator ein, durchläuft diesen und tritt an der konvexen Oberfläche 35 ebenfalls ungebrochen aus diesem aus. Er trifft im weiteren Verlauf auf die Kollimatorlinse 431 in deren zentraler Symmetrieachse, tritt in diese ungebrochen ein und tritt auf der anderen Seite ebenfalls ungebrochen aus. Er verläuft dann parallel zur Hauptstrahlrichtung, durchläuft die Streuplatte 32 und trifft auf die Anzeige 1. Ein Lichtstrahl L4, der die Lichtquelle 2 in einem recht großen Winkel zur Hauptstrahlrichtung verläßt, tritt nahezu ungebrochen durch die Konkavfläche 323 in den Kollimator 3 ein, wird auf der Innenseite der ringförmigen Oberfläche 34 totalreflektiert, trifft auf die Innenseite der gekrümmten Oberfläche 33, an der er ebenfalls totalreflektiert wird, und tritt aus dem Kollimator 3 durch die ringförmige Oberfläche 34 aus, die er nun unter einem Winkel trifft, unter dem keine Totalreflexion auftritt. Nach Verlassen des Kollimators 3 ist der Lichtstrahl L4 bereits nahezu parallel zur Hauptstrahlrichtung, durchläuft die Linsenanordnung 43 in seiner Richtung ungeändert an einer planparallelen Stelle und erreicht die Streuplatte 42 sowie anschließend die Anzeige 1. Ein Lichtstrahl L5, der einen noch größeren Winkel zur Hauptstrahlrichtung aufweist als der Lichtstrahl L4, tritt ebenfalls durch die Konkavfläche 323 in den Kollimator 3 ein, wird zunächst an der Innenseite der ringförmigen Oberfläche 34 totalreflektiert, dann an der Innenseite der gekrümmten Oberfläche 33 und tritt durch die ringförmige Oberfläche 34 aus dem Kollimator 3 aus. Er trifft dann auf die Linsenanordnung 43. Die in dieser Variante gezeigten Mikrolinsen 432 oder die Diffusoroberfläche bewirken folgendes: Das annähernd parallele Licht aus der Kollimationsoptik läßt sich mit Hilfe der Mikrolinsen oder der Diffusoroberfläche gezielt beeinflussen, um die gewünschte räumliche und direktionale Verteilung zu erreichen. Dabei lassen sich durch die Abmessungen und Linsenparameter der Mikrolinsen bzw. durch eine spezifisch gewählte Diffusoroberflächenstruktur die Streuwinkel des Lichts weitestgehend frei einstellen und sowohl symmetrische als auch asymmetrische Lichtstreuverteilungen erzeugen.

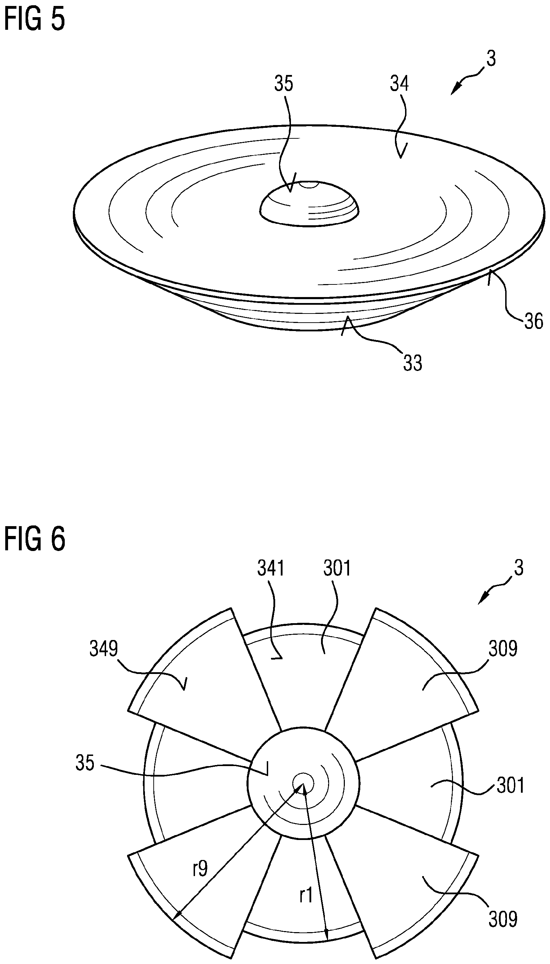

Fig.5 zeigt einen TIR-Kollimator nicht entsprechend der beanspruchten Erfindung, der hier ein runder Kollimator 3 ist, in räumlicher Darstellung. Zu sehen ist die Lichtaustrittsseite, die der Lichtquelle 2 abgewandten Oberseite des Kollimators 3, und im unteren Bereich ein kleiner Teil von dessen Unterseite. Man erkennt die konvexe Oberfläche 35, die von der ringförmigen Oberfläche 34 umgeben wird. Die ringförmige Oberfläche 34 ist im allgemeinen nicht eben, sondern weist auch eine geringe Krümmung auf, die für unterschiedliche Radien nicht notwendigerweise gleichgroß ist. Die Zylinderfläche 36 hat nur eine geringe Ausdehnung, von der gekrümmten Oberfläche 33 sieht man nur einen kleinen Teil. Das aus dieser Variante Kollimator 3 austretende Lichtbündel hat eine gleichmäßige Beleuchtungsstärke und weist einen runden Querschnitt auf. Es ist besonders geeignet zur Hinterleuchtung einer runden Anzeige 1 oder einer quadratischen Anzeige 1, ist aber weniger geeignet zur Aneinanderreihung weiterer entsprechender Kollimatoren 3 zur Hinterleuchtung eines rechteckigen Anzeige 1, da in diesem Fall die Anordnung nicht flächendeckend ist.

Fig.6 zeigt einen segmentierten TIR-Kollimator 3 entsprechend der beanspruchten Erfindung in Draufsicht. Er weist Ringsektoren 301 geringer radialer Ausdehnung r1, und Ringsektoren 309 großer radialer Ausdehnung r9 auf. Sie entsprechen im wesentlichen Ringsektoren der in Figur 5 dargestellten Variante, einmal mit größerem und einmal mit kleinerem Radius. In der Mitte befindet sich die konvexe Oberfläche 35, die hier für beide Arten Ringsektoren 301, 309 gleich ist. Radial nach außen schließt sich eine ringförmige Oberfläche 341 in den Ringsektoren 301 geringer radialer Ausdehnung an und eine ringförmige Oberfläche 349 in den Ringsektoren 309 großer radialer Ausdehnung. Mittels dieser Variante Kollimator 3 wird in erster Näherung ein quadratischer Querschnitt des aus dem Kollimator 3 austretenden Lichtbündels erreicht. Werden weitere Ringsektoren unterschiedlicher radialer Ausdehnung geeignet zusammengesetzt, wird eine noch bessere Annäherung an den gewünschten Querschnitt des aus dem Kollimator 3 austretenden Lichtbündels erreicht.

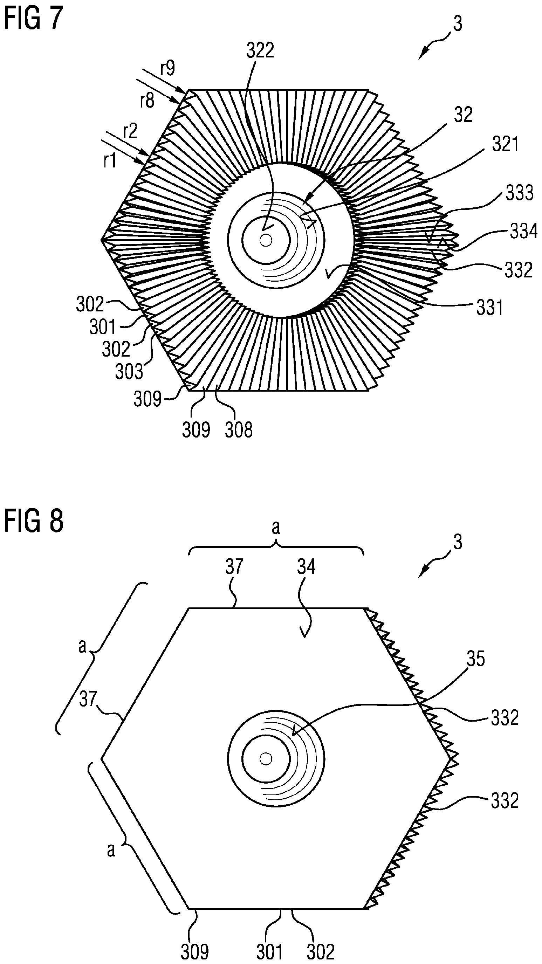

Fig.7 zeigt einen wabenförmigen TIR-Kollimator 3 mit Segmenten 301-309, die nicht als Ringsektoren entsprechend der beanspruchten Erfindung gezeigt sind, von seiner Unterseite aus gesehen. Man erkennt die Ausnehmung 32, die hier eine erste gekrümmte Seitenfläche 321 aufweist und eine ebenfalls gekrümmte Bodenfläche 322. Der Bodenfläche 322 auf der Oberseite gegenüberliegend befindet sich eine hier nicht dargestellte konvexe Oberfläche 35. Auf der Unterseite schließt sich an die gekrümmte Seitenfläche 321 eine radiale Oberfläche 331 an, die nach radial außen schwach gekrümmt ist und die radial außerhalb in V-förmige Nuten 332 übergehen. Die V-förmigen Nuten 332 weisen erste Randflächen 333 und zweite Randflächen 334 auf, die die beiden Seiten des "V" bilden, und entsprechend gegeneinander geneigt sind. Lichtstrahlen, die nicht genau in Radialrichtung verlaufen, beispielsweise weil sie aus einem Randbereich der Lichtquelle 2 entstammen, treffen an eine der Randflächen 333,334 auf, werden dort reflektiert und gelangen von dort auf die andere Randfläche 334,333, und erhalten bei jeder entsprechenden Reflexion einen größeren Winkelanteil im Hauptstrahlrichtung. Auch Lichtstrahlen, die bei einer glatten Oberfläche nicht totalreflektiert sondern zumindest teilweise die Oberfläche passiert hätten, werden an den V-förmigen Nuten 332 aufgrund des streifenden Einfalls auf die Randflächen 333,334 von diesen totalreflektiert und im Kollimator 3 gehalten. Eine Verspiegelung der Oberfläche zur Erhöhung des Anteils der total reflektierten Strahlen ist somit nicht erforderlich. Jede V-förmige Nut 332 befindet sich in einem Segment 301-309 unterschiedlicher radialer Ausdehnung r1-r9, wobei die Segmente 301 eine geringe radiale Ausdehnung r1 haben, welche über die Segmente 302 mit radialer Ausdehnung r2, die Segmente 303 mit radialer Ausdehnung r3 usw. zunimmt um bei den Segmenten 309 die größte radiale Ausdehnung r9 zu erreichen. Die radialen Ausdehnungen r1-r9 sind durch Pfeile an die entsprechenden radial äußeren Bereiche des Kollimators 3 angedeutet.

Fig.8 zeigt die Oberseite des wabenförmigen TIR-Kollimators 3 aus Fig.7. Man erkennt die ringförmige Oberfläche 34 im radial äußeren Bereich und die konvexe Oberfläche 35 im radial inneren Bereich. Die V-förmigen Nuten 332 sind im Randbereich teilweise sichtbar. Die Segmente 301-309 unterscheiden sich im gezeigten Ausführungsbeispiel auf der Oberseite nicht. Der gezeigte Kollimator 3 hat eine in der Ebene senkrecht zur Hauptstrahlrichtung regelmäßige sechseckige Form mit Kanten 37 der Länge a.

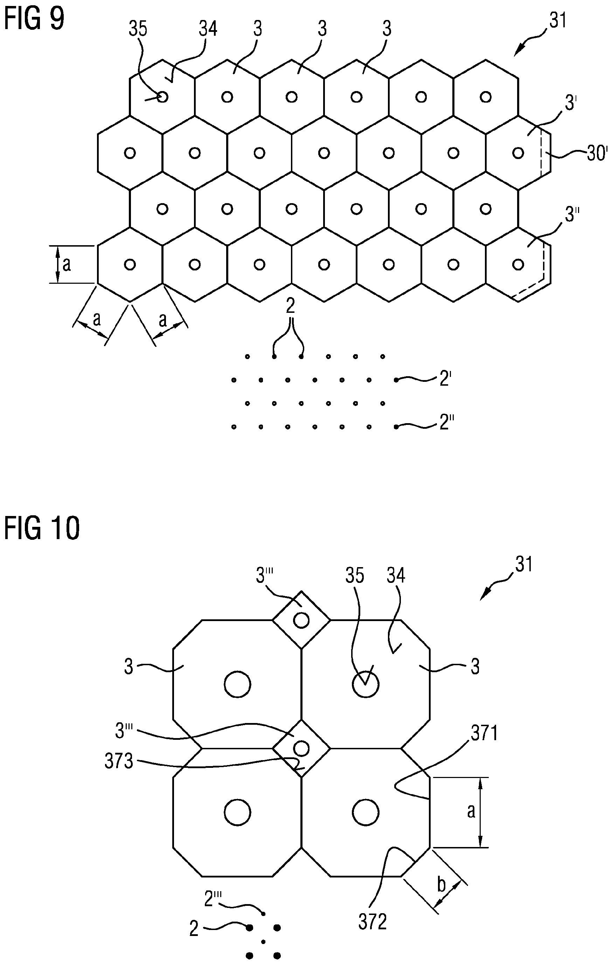

Fig.9 zeigt eine wabenförmige Anordnung von Kollimatoren 3 wie sie beispielsweise in der Kollimatoranordnung 31 enthalten ist. Man erkennt, daß alle Kollimatoren 3 die gleiche Geometrie, hier ein regelmäßiges Sechseck, und gleiche Abmessungen, also gleiche Kantenlänge a, aufweisen. Man erkennt die konvexe Oberfläche 35 im Zentrum jedes der Kollimatoren 3, und die ringförmige Oberfläche 34. Die Kollimatoren 3 sind flächendeckend angeordnet.

Auf der rechten Seite der Abbildung sind in einer Variante ein Kollimator 3' und ein Kollimator 3" gezeigt, die von den Kollimatoren 3 in ihren optischen Eigenschaften abweichen, nicht aber in ihren Abmessungen. Sie lassen sich also problemlos mit den anderen Kollimatoren kombinieren. Bei dem Kollimator 3' ist mittels einer gestrichelten Linie ein Bereich 30' angedeutet, in dem der Kollimator 3' eine niedrigere Beleuchtungsstärke aufweist. Da es sich hier um einen Randbereich handelt, der zu keinem zu beleuchteten Bereich der Anzeige 1 korrespondiert, ist hier keine gleichbleibende Beleuchtungsstärke erforderlich. Es ist vorgesehen, daß zu dem Kollimator 3' eine Lichtquelle 2' zugeordnet ist, die eine geringfügigere Leistung aufweist als die anderen Lichtquellen 2. Der Kollimator 3' verteilt die von der Lichtquelle 2' auf ihn treffenden Lichtstrahlen so, daß in dem außerhalb des Bereichs 30' liegenden Bereich des Kollimators 3' dieselben gleichbleibende Beleuchtungsstärke vorhanden ist wie bei den anderen Kollimatoren 3. Entsprechendes gilt für den Kollimator 3" und dessen Bereich 30" sowie eine diesem zugeordnete Lichtquelle 2" . Im unteren Bereich der Abbildung ist eine entsprechende Anordnung von Lichtquellen 2, 2' und 2" in verkleinerter Form dargestellt.

Fig.10 zeigt eine weitere Kollimatoranordnung 31. Hier sind Kollimatoren 3 mit einem Rechteck angenäherten Abmessungen in einem rechtwinkligen Raster angeordnet. Man erkennt die zentrale konvexe Oberfläche 35 und die ringförmige Oberfläche 34. Die Kollimatoren 3 liegen an ihren längeren Kanten 371 der Kantenlänge a aneinander an, während ihre kürzeren Kanten 372 mit Kantenlänge b nicht aneinander anliegen. Gemäß einer Variante bleiben die entsprechenden Zwickel leer. Sind sie ausreichend klein, führt dies nur zu einer geringen Reduzierung der Beleuchtungsstärke in diesem Bereich, was im Einzelfall tolerierbar sein kann. Gemäß einer bevorzugten Variante sind die Zwickel mittels Kollimatoren 3‴ ausgefüllt, die eine quadratische Form mit Kanten 373 der Kantenlänge b aufweisen. Mittels der Kombination der Kollimatoren 3 und der Kollimatoren 3‴ läßt sich eine flächendeckende Füllung erzielen. Den Kollimatoren 3‴ sind Lichtquellen 2‴ zugeordnet, die eine geringere Leistung als die anderen Lichtquellen 2 aufweisen. Eine entsprechende Anordnung von Lichtquellen 2, 2‴ ist im unteren Bereich der Abbildung gezeigt.

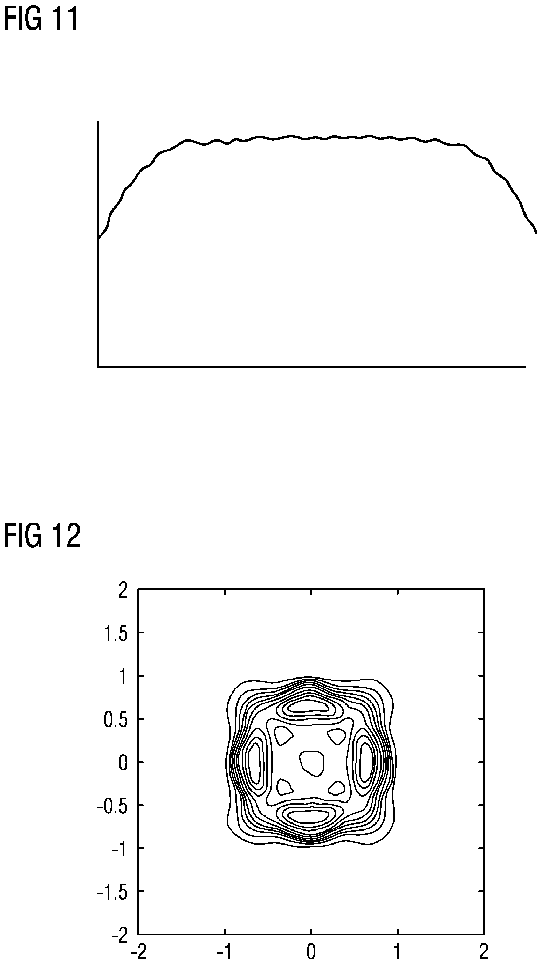

Fig. 11 zeigt die Beleuchtungsstärke entlang einer Linie durch den Mittelpunkt des wabenförmigen Kollimators 3 der Kollimatoranordnung 31 der Fig.10. Man erkennt, daß die Beleuchtungsstärke über einen ausgedehnten Bereich nahezu konstant ist, was zu einer gleichmäßigen Ausleuchtung der Anzeige 1 führt.

Fig.12 zeigt eine Höhenliniendarstellung der Lichtverteilung eines aus Ringsektoren 301-309 bestehenden Kollimators entsprechend Fig.6. Man erkennt auch hier die über einen ausgedehnten Bereich recht gleichmäßige Beleuchtungsstärke.

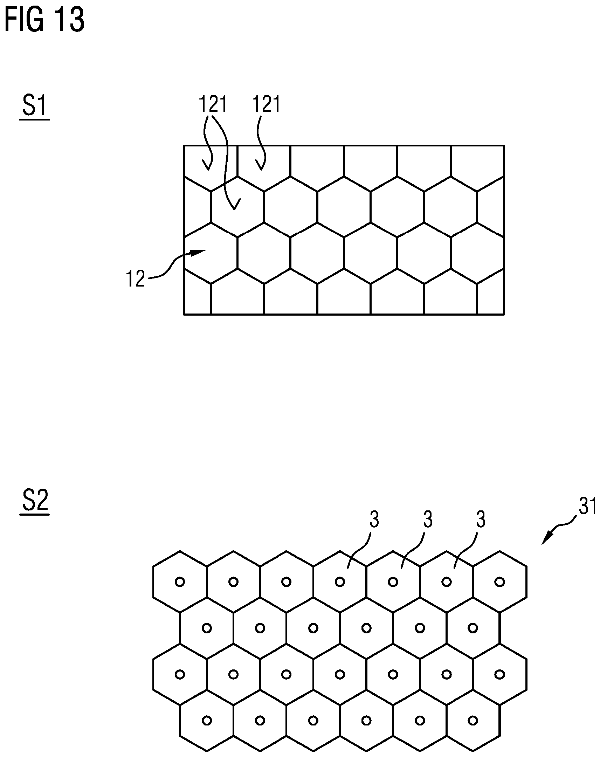

Fig.13 zeigt ein Verfahren zum Betreiben eines erfindungsgemäßen Head-Up-Diplays. In einem Schritt S1 wird die Anzeigefläche 12 der Anzeige 1 in Flächen 121 aufgeteilt, die den einzelnen Kollimatoren 3 entsprechen. Für jede der Flächen 121 wird die maximal darzustellende Helligkeit ermittelt. In einem Schritt S2 wird für jede der Flächen 121 die zum zugehörigen Kollimator 3 zugeordnete Lichtquelle 2 (hier von den Kollimatoren 3 verdeckt und daher nicht dargestellt) so angesteuert, daß sie die für die zugehörige Fläche 121 ermittelte maximal darzustellende Helligkeit abgibt. Die Lichtquellen 2 werden somit gedimmt, lokales Dimmen ist somit erreicht. Die zum Betreiben des Head-Up-Displays erforderliche Energiemenge wird reduziert, ebenso die in den Lichtquellen 2 erzeugte Abwärme. Letzteres trägt zur Erhöhung der Lebensdauer der Anzeige 1 bei. Die Anzeige 1 wird entsprechend so angesteuert, daß die einer Fläche 121 zugeordneten Pixel entsprechend der Abschwächung der Leistung der zugehörigen Lichtquelle 2 auf größeren Durchlaß geschaltet werden, sodaß dem Nutzer das lokale Dimmen nicht auffällt.

Die Erfindung betrifft die Verwendung einer Anordnung aus Lichtleitern, den Kollimatoren 3, wie beispielsweise in Fig.9 dargestellt. Die Kollimatoren 3 verteilen jeweils über Lichtbrechung und Reflektion, auch über totaler interne Reflektion, kurz TIR genannt, das Licht einer Lichtquelle 2 über einen lokalen Bereich. Die Anordnung aus Kollimatoren 3 sitzt somit über einer Anordnung aus Lichtquellen 2 und verteilt das Licht jeder Lichtquelle 2 auf einen lokalisierten Bereich. Dadurch wird über die individuelle Ansteuerung der Lichtquellen 2 eine maßgeschneiderte Ausleuchtung der Zielfläche, wie z.B. einer Displayfläche, der Anzeige 1, erreicht. Die Erfindung bezieht sich auf die Anwendung und Anpassung der Kollimatoren 3 zur Ausleuchtung, auch zur lokalen Ausleuchtung, von Anzeigen 1 mit sehr geringem Bauvolumen. Dabei handelt es sich insbesondere um die Anzeige 1 eines Head-Up-Displays. In Fig.4 ist als Kollimator 3 eine einzelne Lichtleitereinheit im Querschnitt dargestellt, die das Licht der Lichtquelle 2 zunächst über Brechung an ihrer Eintrittsfläche, der gekrümmten Oberfläche 33, gezielt im Lichtleitervolumen verteilt. Der Großteil des Lichts wird anschließend an der Oberseite des Lichtleiters an der ringförmigen Oberfläche 34 über TIR umgelenkt und trifft an die Rückseite des Lichtleiters, an der eine weitere Reflexions- oder TIR-Wechselwirkung stattfindet. Anschließend trifft der Strahl erneut auf die Oberfläche 34 des Lichtleiters, an der er schließlich austritt. Der von der Lichtquelle 2 näherungsweise senkrecht emittierte Lichtanteil, zu dem der Lichtstrahl L1 gehört, tritt ebenfalls in den Lichtleiter ein, wird dann zur Oberseite hin gebrochen, an der er durch die konvexe Oberfläche 35 direkt austritt. Durch ein geeignetes Design der Lichtleiterstruktur, läßt sich das Licht auf kleiner Bauhöhe effizient und homogen verteilen.

Die in Fig.3-4 veranschaulichten 2D-Profile ergeben nach 360° Rotation um die vertikale Achse eine zirkulare 3D Geometrie, siehe Fig.5. Diese wird in mehrfacher Ausführung in einem Array angeordnet, welches die Abmessungen der auszuleuchtenden Fläche hat, und somit eine Lichtleiterarrayplatte, die Kollimatoranordnung 31, ergibt, siehe beispielsweise Fig.9. Zur besseren Flächenausfüllung, läßt sich die einzelne Lichtleitereinheit auch beispielsweise rechteckig, sechseckig (Fig.7-8), achteckig oder in anderen Außenkonturen ausführen. Dies erfolgt entweder über die Beschneidung der runden Geometrie, oder auch in einer segmentweisen Ausführung der Struktur, die abschnittsweise mehrere 2D-Profile verwendet, die jeweils nur um einen kleineren Winkelbereich rotiert werden. Siehe hierzu beispielsweise Fig. 6-8. In dieser Variante lassen sich ebenfalls Lichtverteilungen realisieren, die nicht rotationssymmetrisch sind.

Im Array als Kollimatoranordnung 31 angewendet entsteht somit eine skalierbare Lösung, die zur Ausleuchtung beliebig großer Flächen geeignet ist, wenn das Array mit entsprechend vielen Einheiten ausgelegt wird. Die Größe einer einzelnen Lichtleitereinheit, des Kollimators 3, ist ebenfalls in gewissen Grenzen skalierbar, sodaß abhängig von der zur Verfügung stehenden Bauhöhe, das lokale Beleuchtungsfeld skaliert werden kann. Wird nur der Kollimator 3 skaliert, aber nicht die Größe der Lichtquelle, dann verändert sich die Abstrahlcharakteristik des Kollimators und der in der Mitte mithilfe der als Linse wirkenden konvexen Oberfläche 35 auszufüllende Bereich ist unterschiedlich groß.

Durch geeignete Strukturierung des Lichtleiters läßt sich eine Funktion nur durch Lichtbrechung und TIR erreichen, ohne daß eine zusätzliche Beschichtung mit einer reflektierenden Schicht nötig ist. Ein Beispiel dazu ist zu Fig.7 beschrieben. Durch die alternative Anwendung einer solchen Beschichtung läßt sich eine vereinfachte Geometrie realisieren.

In Verbindung mit lokalem Dimmen wird eine Verbesserung der Energiebilanz und Verbesserung der lokalen Schwarzbild-Homogenität erzielt, einhergehend mit einer Optimierung des Bauraumbedarfes für Anwendungen in Head-Up-Displays. Der in Hauptstrahlrichtung dünne, makro- und mikrostrukturierter Kollimator 3 dient als Lichtleiter und beleuchtet lokal einen Teil der Anzeige 1. Dies ermöglicht es, in Abhängigkeit des Bildinhalts nur die Bereiche überhaupt von hinten zu beleuchten, die hell dargestellt werden sollen. Für die Hinterleuchtung von einem Bereich von 20x20 mm² wird eine Bauhöhe von weniger als 10 mm genutzt. Vorteile der Erfindung sind unter anderem Energieeffizienz, reduzierter Bauraumbedarf und verbesserte Schwarzhomogenität, sowie eine Reduzierung des Fertigungsaufwandes durch Wegfall von Beschichtungen und durch Reduzierung der Anzahl von unterschiedlichen Einzelteilen.

Es versteht sich, daß die in den einzelnen Ausführungsbeispielen und in der Beschreibungseinleitung genannten Maßnahmen auch in anderen als den dargestellten Kombinationen sinnvoll verwendbar sind, und Weiterbildungen im Ermessen des Fachmanns stehen.

## Patentansprüche

1. Head-Up-Display mit einer Anzeige (1), die von mehreren, verteilt angeordneten Lichtquellen (2) beleuchtet wird, wobei zwischen jeder Lichtquelle (2) und der Anzeige (1) ein TIR-Kollimator (3) angeordnet ist, und wobei der TIR-Kollimator (3) ein die von der ihm zugeordneten Lichtquelle (2) kommenden Strahlen (LB1) in ein gerichtetes Strahlenbündel (LB2) gleichmäßiger Beleuchtungsstärke umverteilender TIR-Kollimator (3) ist, **dadurch gekennzeichnet, daß** der TIR-Kollimator (3) eine Vielzahl von Ringsektoren (301-309) unterschiedlicher radialer Ausdehnung (r1-r9) aufweist, die derart angeordnet sind, daß für das gerichtete Strahlenbündel (LB2) durch die Kombination der radialen Segmente (301-309) mit unterschiedlicher radialer Ausdehnung (r1-r9) eine Annäherung an den gewünschten Querschnitt des aus dem TIR-Kollimator (3) austretenden Lichtbündels erreicht wird.

2. Head-Up-Display gemäß Anspruch 1, weiterhin aufweisend ein Lichtverteilungselement (42,43,431,432).

3. Head-Up-Display gemäß Anspruch 2, wobei das Lichtverteilungselement zumindest eines ist aus Streuplatte (42), Linsenanordnung (43), Linse (431) und Mikrolinsen (432).

4. Head-Up-Display gemäß Anspruch 1, wobei zumindest ein Ringsektor (301-309) des TIR-Kollimators (3) Randflächen (333,334) aufweist, die einen Teil der auf sie auftreffenden Lichtstrahlen in zumindest einen benachbarten Ringsektor (302-309) leiten.

5. Head-Up-Display gemäß einem der vorhergehenden Ansprüche, wobei die den mehreren Lichtquellen (2,2',2",2‴) zugeordneten TIR-Kollimatoren (3,3',3",3‴) identische Abmessungen (a) aufweisen.

6. Head-Up-Display gemäß einem der vorhergehenden Ansprüche, wobei die den mehreren Lichtquellen (2,2',2",2‴) zugeordneten TIR-Kollimatoren (3,3',3",3‴) lückenlos angeordnet sind.

7. Head-Up-Display gemäß einem der vorhergehenden Ansprüche, wobei zumindest zwei unterschiedliche Typen Lichtquellen (2,2',2") vorhanden sind und für jeden der unterschiedlichen Typen Lichtquelle (2,2',2") einen Typ Kollimator (3,3',3"), wobei die Kollimatoren (3,3',3") untereinander in der Fläche gleiche Abmessungen (a) aufweisen.

8. Head-Up-Display gemäß einem der vorhergehenden Ansprüche, wobei der TIR-Kollimator (3) Oberflächen aufweist, die mit einer nach innen reflektierenden Beschichtung versehen sind.

9. Head-Up-Display gemäß einem der vorhergehenden Ansprüche, wobei die Ringsektoren (301-309) unterschiedlicher radialer Ausdehnung (r1-r9) derart angeordnet sind, daß für das gerichtete Strahlenbündel (LB2) eine näherungsweise quadratische Lichtverteilung erreicht wird.

## Claims

1. Head-up display having a display (1) illuminated by a plurality of light sources (2) arranged in distributed fashion, wherein a TIR collimator (3) is arranged between each light source (2) and the display (1) and wherein the TIR collimator (3) is a TIR collimator (3) which redistributes the rays (LB1) coming from the light source (2) assigned thereto into a directed beam (LB2) of uniform illuminance, **characterized in that** the TIR collimator (3) has a multiplicity of ring sectors (301-309) of differing radial extent (r1-r9), said ring sectors being arranged such that an approximation to the desired cross section of the light beam emanating from the TIR collimator (3) is achieved for the directed beam (LB2) as a result of the combination of the radial segments (301-309) with different radial extents (r1-r9).

2. Head-up display according to Claim 1, further including a light distribution element (42, 43, 431, 432).

3. Head-up display according to Claim 2, wherein the light distribution element is at least one of a diffuser plate (42), a lens arrangement (43), a lens (431) and microlenses (432).

4. Head-up display according to Claim 1, wherein at least one ring sector (301-309) of the TIR collimator (3) has marginal faces (333, 334) that guide some of the light rays incident thereon into at least one adjacent ring sector (302-309).

5. Head-up display according to any of the preceding claims, wherein the TIR collimators (3, 3', 3", 3‴) assigned to the plurality of light sources (2, 2', 2", 2‴) have identical dimensions (a).

6. Head-up display according to any of the preceding claims, wherein the TIR collimators (3, 3', 3", 3‴) assigned to the plurality of light sources (2, 2', 2", 2‴) are arranged without gaps.

7. Head-up display according to any of the preceding claims, wherein at least two different types of light sources (2, 2', 2") are present and for each of the different types of light source (2, 2', 2") one type of collimator (3, 3', 3") is present, wherein the collimators (3, 3', 3") have the same dimensions (a) in terms of area.

8. Head-up display according to any of the preceding claims, wherein the TIR collimator (3) has surfaces that are provided with an inwardly reflecting coating.

9. Head-up display according to any of the preceding claims, wherein the ring sectors (301-309) of differing radial extent (r1-r9) are arranged such that an approximately square light distribution is obtained for the directed beam (LB2).

## Revendications

1. Dispositif d'affichage tête haute, comprenant un affichage (1) qui est éclairé par plusieurs sources de lumière (2) réparties, dans lequel un collimateur TIR (3) est disposé entre chaque source de lumière (2) et l'affichage (1), et dans lequel le collimateur TIR (3) est un collimateur TIR redistribuant des rayons (LB1) provenant de la source de lumière (2) qui lui est associée en un faisceau directionnel (LB2) d'intensité d'éclairage homogène, **caractérisé en ce que** le collimateur TIR (3) présente une pluralité de secteurs d'anneau (301 à 309) d'étendue radiale différente (r1 à r9) qui sont disposés de façon à obtenir pour le faisceau directionnel (LB2) une approximation de la section transversale souhaitée du faisceau de lumière sortant du collimateur TIR (3) par la combinaison des segments radiaux (301 à 309) d'étendue radiale différente (r1 à r9).

2. Dispositif d'affichage tête haute selon la revendication 1, présentant en outre un élément de distribution de lumière (42, 43, 431, 432).

3. Dispositif d'affichage tête haute selon la revendication 2, dans lequel l'élément de distribution de lumière est au moins un élément parmi une plaque de diffusion (42), un agencement de lentilles (43), une lentille (431) et des microlentilles (432).

4. Dispositif d'affichage tête haute selon la revendication 1, dans lequel au moins un secteur d'anneau (301 à 309) du collimateur TIR (3) présente des surfaces marginales (333, 334) qui dirigent une partie des rayons de lumière incidents sur celles-ci dans au moins un secteur d'anneau voisin (302 à 309).

5. Dispositif d'affichage tête haute selon l'une quelconque des revendications précédentes, dans lequel les collimateurs TIR (3, 3', 3", 3‴) associés aux plusieurs sources de lumière (2, 2', 2", 2‴) présentent des dimensions (a) identiques.

6. Dispositif d'affichage tête haute selon l'une quelconque des revendications précédentes, dans lequel les collimateurs TIR (3, 3', 3", 3‴) associés aux plusieurs sources de lumière (2, 2', 2", 2‴) sont disposés sans intervalle.

7. Dispositif d'affichage tête haute selon l'une quelconque des revendications précédentes, dans lequel au moins deux types différents de sources de lumière (2, 2', 2") sont présents, et pour chacun des différents types de source de lumière (2, 2', 2"), un type de collimateur (3, 3', 3") est présent, dans lequel les collimateurs (3, 3', 3") présentent entre eux les mêmes dimensions (a) dans la surface.

8. Dispositif d'affichage tête haute selon l'une quelconque des revendications précédentes, dans lequel le collimateur TIR (3) présente des surfaces qui sont munies d'un revêtement réfléchissant vers l'intérieur.

9. Dispositif d'affichage tête haute selon l'une quelconque des revendications précédentes, dans lequel les secteurs d'anneau (301 à 309) d'étendue radiale différente (r1 à r9) sont disposés de façon à obtenir une distribution de lumière approximativement quadratique pour le faisceau directionnel (LB2).
